(19) **Europäisches Patentamt / European Patent Office / Office européen des brevets**

(11) **EP 3 786 240 A1**

(12) # EUROPEAN PATENT APPLICATION
published in accordance with Art. 153(4) EPC

(43) Date of publication:
**03.03.2021 Bulletin 2021/09**

(21) Application number: **19794056.2**

(22) Date of filing: **25.04.2019**

(51) Int Cl.:
**C09D 11/107** *(2014.01)*    **C09D 11/102** *(2014.01)*

(86) International application number:
**PCT/JP2019/017663**

(87) International publication number:
**WO 2019/208704 (31.10.2019 Gazette 2019/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.04.2018 JP 2018087623**

(71) Applicant: **Mitsubishi Chemical Corporation**
**Chiyoda-ku**
**Tokyo 100-8251 (JP)**

(72) Inventors:
• **OU, Etsu**
  **Tokyo 100-8251 (JP)**
• **SATO, Akira**
  **Tokyo 100-8251 (JP)**
• **HARAGUCHI, Shinsuke**
  **Tokyo 100-8251 (JP)**
• **TOKUE, Hiroshi**
  **Tokyo 100-8251 (JP)**
• **SERIZAWA, Masashi**
  **Tokyo 100-8251 (JP)**

(74) Representative: **Hoffmann Eitle**
**Patent- und Rechtsanwälte PartmbB**
**Arabellastraße 30**
**81925 München (DE)**

(54) ## WATER-BASED INK

(57)    Provided is a water-based ink which has high dispersibility of a pigment and imparts high smoothness and glossiness to a coating film obtainable from the water-based ink. Water-based ink of the present invention is a water-based ink containing a pigment, a vehicle, and water, in which the vehicle contains an alkali-soluble resin (I) and a composite resin (II), and the composite resin (II) is a composite resin of a urethane polymer (e) and an acrylic polymer (f).

EP 3 786 240 A1

**Description**

[Technical Field]

The present invention relates to a water-based ink.

Priority is claimed on Japanese Patent Application No. 2018-087623, filed April 27, 2018, the content of which is incorporated herein by reference.

[Background Art]

As a composition for a water-based ink containing a pigment, for example, Patent Literature 1 describes a composition obtained by mixing an aqueous solution of a vinylic polymer with an aqueous dispersion of a urethane-based polymer.

In addition, Patent Literature 2 describes a composition produced by allowing a urethane-based polymer to be present in the polymerization process of a vinylic monomer.

[Citation List]

[Patent Literature]

[Patent Literature 1] Japanese Unexamined Patent Application, First Publication No. H7-48538
[Patent Literature 2] Japanese Unexamined Patent Application, First Publication No. H4-41517

[Summary of Invention]

[Technical Problem]

However, a coating film obtainable from a water-based ink obtained by adding a pigment to the composition described in Patent Literature 1 had a tendency of low smoothness and glossiness.

Further, a water-based ink obtained by adding a pigment to the composition described in Patent Literature 2 had insufficient dispersibility of a pigment.

An object of the present invention is to provide a water-based ink which has high dispersibility of a pigment and imparts high smoothness and glossiness to a coating film obtainable from the water-based ink.

[Solution to Problem]

The present invention has the following aspects.

[1] A water-based ink including, a pigment, a vehicle, and water,
in which the vehicle contains an alkali-soluble resin (I) and a composite resin (II), and
the composite resin (II) is a composite resin of a urethane polymer (e) and an acrylic polymer (f).
[2] The water-based ink according to [1], in which the composite resin (II) is an emulsion type resin.
[3] The water-based ink according to [1] or [2], in which the alkali-soluble resin (I) is a neutralized product of a copolymer (I') by a base, and
the copolymer (I') has a monomer unit derived from a styrene derivative (a) and a monomer unit derived from an acid group-containing vinyl compound (b).
[4] The water-based ink according to [3], in which the copolymer (I') further has a monomer unit derived from methyl methacrylate (c).
[5] The water-based ink according to [4], in which the copolymer (I') further has a monomer unit derived from a vinylic monomer (d) other than the monomer unit derived from the styrene derivative (a), the monomer unit derived from the acid group-containing vinyl compound (b), and the monomer unit derived from the methyl methacrylate (c).
[6] The water-based ink according to [5], in which with respect to a mass (100% by mass) of the copolymer (I'), the content proportion of the monomer unit derived from the styrene derivative (a) is 5% to 30% by mass,
the content proportion of the monomer unit derived from the acid group-containing vinyl compound (b) is 4% to 20% by mass,
the content proportion of the monomer unit derived from the methyl methacrylate (c) is 5% to 70% by mass, and

the content proportion of the monomer unit derived from the vinylic monomer (d) is 10% to 70% by mass.

[7] The water-based ink according to [5] or [6], in which the vinylic monomer (d) contains an alkyl (meth)acrylate containing an alkyl group having 4 to 15 carbon atoms.

[8] The water-based ink according to [5] or [6], in which the vinylic monomer (d) contains an alkyl (meth)acrylate containing an alkyl group having 4 to 6 carbon atoms.

[9] The water-based ink according to [5] or [6], in which the vinylic monomer (d) contains an alkyl (meth)acrylate containing an alkyl group having 7 to 10 carbon atoms.

[10] The water-based ink according to [8], in which the vinylic monomer (d) further contains an alkyl (meth)acrylate containing an alkyl group having 7 to 10 carbon atoms.

[11] The water-based ink according to any one of [3] to [10], in which a second-order transition temperature of the copolymer (I') is 10°C to 150°C.

[12] The water-based ink according to any one of [3] to [11], in which the copolymer (I') has a weight-average molecular weight of 5,000 to 30,000.

[13] The water-based ink according to any one of [3] to [12], in which an acid value of the copolymer (I') is 35 to 200 mg KOH/g.

[14] The water-based ink according to any one of [3] to [13], in which a mass ratio [mass of copolymer (I')/mass of composite resin (II)] of the copolymer (I') to the composite resin (II) is 5/95 to 95/5.

[15] The water-based ink according to any one of [1] to [14], in which the water-based ink is an ink for gravure printing.

[Advantageous Effects of Invention]

A water-based ink of the present invention has high dispersibility of a pigment and imparts high smoothness and glossiness to a coating film obtainable from the water-based ink.

[Description of Embodiments]

In the present specification and claims, "(meth)acrylate" is a general term for acrylate and methacrylate. "(Meth)acrylic acid" is a general term for acrylic acid and methacrylic acid. The "(meth)acryloyl group" is a general term for an acryloyl group and a methacryloyl group.

The "monomer unit" means a constitutional unit derived from a monomer constituting a polymer.

A water-based ink of the present invention contains a pigment, a vehicle, and water.

(Pigment)

The pigment contained in the water-based ink of the present invention is a coloring agent and may be one or both of an inorganic pigment and an organic pigment.

Examples of the inorganic pigment include titanium oxide, red iron oxide, and an extender pigment. Examples of the organic pigment include an azo-based, a polycyclic, and a lake pigment-based organic pigments.

The content of the pigment contained in the water-based ink of the present invention varies depending on the kind of the pigment, but the content is preferably 10 to 1,000 parts by mass in a case where the vehicle is 100 parts by mass. The content of the pigment is preferably 20 to 1000 parts by mass in a case of the inorganic pigment and 10 to 600 parts by mass in a case of an organic pigment. For example, in a case of titanium oxide, 20 to 60 parts by mass are preferable, and 30 to 40 parts by mass are more preferable.

In a case where the content of the pigment in the water-based ink is equal to or greater than the lower limit value described above, the coating film formed from the water-based ink can be sufficiently colored, and in a case where the content of the pigment is equal to or lower than the upper limit value, the aggregation of the pigment is easily prevented.

(Vehicle)

The vehicle contained in the water-based ink of the present invention contains an alkali-soluble resin (I) and a composite resin (II).

The alkali-soluble resin (I) is not particularly limited as long as it is a resin soluble in an alkali, but preferably is a neutralized product of a copolymer (I') by a base, which has a monomer unit derived from a styrene derivative (a) and a monomer unit derived from an acid group-containing vinyl compound (b).

The composite resin (II) is a polymer obtained by compositing a urethane polymer (e) and an acrylic polymer (f), that is, a composite resin.

The vehicle may further contain another vehicle other than an alkali-soluble resin (I) and a composite resin (II).

<Alkali-soluble resin (I)>

The alkali-soluble resin (I) is, for example, a neutralized product of a copolymer (I') by a base, and the copolymer (I') has an acid group since a monomer unit derived from an acid group-containing vinyl compound (b) is contained.

In this case, the copolymer that is the alkali-soluble resin (1), which has been converted to a salt by the neutralization of the copolymer (I'), has improved solubility in water and can be dissolved in water. It is not necessary for all the acid groups of the copolymer (I') to be neutralized, and the neutralization rate is preferably 30% or more and more preferably 70% or more. Here, the neutralization rate is the proportion (%) of the number of moles of acid groups neutralized by a base with respect to the number of moles of all acid groups in the copolymer (I').

[Copolymer (I')]

The copolymer (I') is a copolymer having a monomer unit (hereinafter, also referred to as "monomer (a) unit") derived from a styrene derivative (a) (hereinafter, also referred to as "monomer (a)") and a monomer unit (hereinafter, also referred to as "monomer (b) unit") derived from an acid group-containing vinyl compound (b) (hereinafter, also referred to as "monomer (b)").

The copolymer (I') may have a monomer unit (hereinafter, also referred to as "monomer (c) unit") derived from methyl methacrylate (c) (hereinafter, also referred to as "monomer (c)") in addition to the monomer (a) unit and the monomer (b) unit.

In addition to the monomer (a) unit and the monomer (b) unit, the copolymer (I') may have a monomer unit (hereinafter, referred to as "monomer (d) unit") derived from a vinylic monomer (d) (hereinafter, referred to as "monomer (d)") (a vinylic monomer other than the monomer (a), the monomer (b), and the monomer (c), which is copolymerizable with the monomer (c) in a case where the copolymer (I') further contains a monomer (c) unit) other than the monomer (a) and the monomer (b), which is copolymerizable with the monomer (a) and the monomer (b).

The copolymer (I') may have both the monomer (c) unit and the monomer (d) unit, in addition to the monomer (a) unit and the monomer (b) unit.

The monomer (a) unit imparts glossiness to the coating film of the water-based ink. Further, the monomer (a) unit contributes to improving the compatibility of the alkali-soluble resin (1) with the composite resin (II).

Specific examples of the monomer (a) include styrene, $\alpha$-methyl styrene, and p-methyl styrene.

The monomer (a) may be used alone or in a combination of two or more thereof.

Among the monomers (a), styrene is preferred from the viewpoint of the easiness of polymerization when producing the copolymer (I').

The monomer unit derived from the monomer (b) provides an acid group to the copolymer (I').

Examples of the monomer (b) include a vinyl compound having an acid group such as carboxylic acid and sulfonic acid, and specific examples thereof include: monobasic acids such as acrylic acid, methacrylic acid, and crotonic acid; dibasic acids such as fumaric acid, maleic acid, and itaconic acid; anhydrides of these monobasic acids and dibasic acids; and partial esters of these dibasic acids.

The monomer (b) may be used alone or in a combination of two or more thereof.

Among the monomers (b), a monomer having carboxylic acid is preferable from the viewpoint of solubility of the alkali-soluble resin (I) in water. Among the monomers having carboxylic acid, methacrylic acid and acrylic acid are preferred.

The monomer (c) unit contributes to improving the hardness of the alkali-soluble resin (I). Therefore, a water-based ink containing the alkali-soluble resin (I) having the monomer (c) unit can improve the hardness of the ink coating film.

The monomer (d) unit is used in a case of adjusting the physical properties and characteristics of the polymer (I) depending on the amount and type thereof. The monomer (d) is a monomer copolymerizable with the monomer (a), the monomer (b), and as necessary the monomer (c), and is a monomer other than the monomer (a), the monomer (b), and the monomer (c).

Specific examples of the monomer (d) include an alkyl (meth)acrylate having an alkyl group having 2 to 18 carbon atoms, a hydroxyalkyl (meth)acrylate, a glycol di(meth)acrylate, an alkylamino (meth)acrylate, other (meth)acrylates, and a vinyl monomer other than (meth)acrylate.

Examples of the alkyl (meth)acrylate having an alkyl group having 2 to 18 carbon atoms include ethyl (meth)acrylate, n-butyl (meth)acrylate, i-butyl (meth)acrylate, t-butyl (meth)acrylate, cyclohexyl (meth)acrylate, 2-ethylhexyl (meth)acrylate, lauryl (meth)acrylate, and stearyl (meth)acrylate.

Examples of the hydroxyalkyl (meth)acrylate include 2-hydroxyethyl (meth)acrylate and 2-hydroxypropyl (meth)acrylate.

Examples of the glycol di(meth)acrylate include ethylene glycol di(meth)acrylate and butylene glycol (meth)acrylate.

Examples of the alkylamino (meth)acrylate include dimethylaminoethyl (meth)acrylate.

Examples of the other (meth)acrylates include a dimethylaminoethyl (meth)acrylate methyl chloride salt, cyclohexyl (meth)acrylate, allyl (meth)acrylate, trimethylolpropane tri(meth)acrylate, and glycidyl (meth)acrylate.

Examples of the vinyl monomer other than (meth)acrylate include vinyl acetate, vinyl propionate, and (meth)acrylonitrile.

The monomer (d) may be used alone or in a combination of two or more thereof.

The monomer (d) preferably contains an alkyl (meth)acrylate containing an alkyl group having 4 to 15 carbon atoms. In a case where the copolymer (I') has an alkyl (meth)acrylate unit, the compatibility of the alkali-soluble resin (I) with the composite resin (II) tends to increase as the number of carbon atoms of the alkyl group of the alkyl (meth)acrylate increases. In addition, the hardness of the alkali-soluble resin (I) tends to increase as the number of carbon atoms of the alkyl group of the alkyl (meth)acrylate decreases. For these reasons, the copolymer (I') preferably contains an alkyl (meth)acrylate unit containing an alkyl group having 4 to 15 carbon atoms.

Among them, in terms of improving the solubility of the alkali-soluble resin (I) in water in a case of producing a water-based ink, the monomer (d) is more preferably an alkyl (meth)acrylate containing an alkyl group having 4 to 6 carbon atoms.

Further, in terms of further improving the dispersibility of the pigment of the water-based ink, the monomer (d) is more preferably an alkyl (meth)acrylate containing an alkyl group having 7 to 10 carbon atoms.

The monomer (d) more preferably contains both an alkyl (meth)acrylate having an alkyl group having 4 to 6 carbon atoms and an alkyl (meth)acrylate having an alkyl group having 7 to 10 carbon atoms.

In a case where an alkyl (meth)acrylate containing an alkyl group having 4 to 6 carbon atoms and an alkyl (meth)acrylate containing an alkyl group having 7 to 10 carbon atoms are used in combination, the smoothness and glossiness of the coating film of the water-based ink can be further improved.

In a case where the copolymer (I') has the monomer (a) unit, the monomer (b) unit, the monomer (c) unit, and the monomer (d) unit, the preferred content proportion of each of the monomer units is as follows.

The content proportion of the monomer (a) unit in the copolymer (I') is preferably 5% to 30% by mass and more preferably 8% to 20% by mass, with respect to the mass (100% by mass) of the copolymer (I').

In a case where the content proportion of the monomer (a) unit is equal to or greater than the lower limit value described above, the glossiness of the ink coating film can be further improved.

Further, in a case where the content proportion of the monomer (a) unit is equal to or lower than the upper limit value described above, the solubility of the alkali-soluble resin (I) in water can be further improved.

The content proportion of the monomer (b) unit in the copolymer (I') is preferably 4% to 20% by mass and more preferably 7% to 18% by mass, with respect to the mass (100% by mass) of the copolymer (I').

In a case where the content proportion of the monomer (b) unit is equal to or greater than the lower limit value described above, the solubility of the alkali-soluble resin (I) in water can be further improved.

In a case where the content proportion of the monomer (b) unit is equal to or less than the upper limit value described above, the smoothness and the glossiness of the ink coating film can be further improved.

The content proportion of the monomer (c) unit in the copolymer (I') is preferably 5% to 70% by mass and more preferably 10% to 60% by mass, with respect to the mass (100% by mass) of the copolymer (I').

In a case where the content proportion of the monomer (c) unit is equal to or greater than the lower limit value described above, the hardness of the alkali-soluble resin (I) in water can be further improved.

In a case where the content proportion of the monomer (c) unit is equal to or lower than the upper limit value described above, the solubility of the alkali-soluble resin (I) in water can be further improved.

The content proportion of the monomer (d) unit in the copolymer (I') is preferably 10% to 70% by mass and more preferably 20% to 60% by mass, with respect to the mass (100% by mass) of the copolymer (I').

In a case where the content proportion of the monomer (d) unit is within the above range, the effect of having the monomer (a) unit, the monomer (b) unit, and the monomer (c) unit can be sufficiently exhibited while the effect of having the monomer (d) unit can be exhibited.

Examples of the copolymer (I') include:

a styrene-acrylic resin obtained by copolymerizing a monomer mixture containing styrene as the monomer (a), (meth)acrylic acid as the monomer (b), and a (meth)acrylic acid ester as the monomers (c) and (d);
a styrene-maleic acid-acrylic acid-based resin obtained by copolymerizing a monomer mixture containing styrene as the monomer (a), maleic acid anhydride and (meth)acrylic acid as the monomer (b), and (meth)acrylic acid ester as the monomers (c) and (d); and
a styrene-maleic acid-based resin obtained by copolymerizing a monomer mixture containing styrene as the monomer (a) and maleic acid anhydride as the monomer (b).

The second-order transition temperature of the copolymer (I'), that is, the glass transition temperature is preferably 10°C to 150°C, more preferably 20°C to 110°C, and still more preferably 25°C to 60°C.

The second-order transition temperature of the copolymer (I') is determined by differential scanning calorimetry measurement (DSC).

In a case where the second-order transition temperature of the copolymer (I') is equal to or greater than the lower limit value described above, the tackiness of the ink coating film is decreased, and thus the stain resistance and blocking resistance of the printed article tend to be improved.

In a case where the second-order transition temperature of the copolymer (I') is equal to or lower than the upper limit value described above, the ink coating film tends to be soft and the adhesiveness to the printing object medium tends to be improved.

The second-order transition temperature of the copolymer (I') can be adjusted by, for example, the composition of the monomer units constituting the copolymer (I').

The weight-average molecular weight of the copolymer (I') is preferably 5000 to 30000, more preferably 6000 to 25000, and still more preferably 6000 to 10000.

The weight-average molecular weight of the copolymer (I') is a value measured by gel permeation chromatography (GPC) and determined using standard polystyrene having a known molecular weight.

In a case where the weight-average molecular weight of the copolymer (I') is equal to or greater than the lower limit value described above, the strength of the ink coating film tends to be improved.

In a case where the weight-average molecular weight of the copolymer (I') is equal to or lower than the upper limit value described above, the compatibility of the alkali-soluble resin (I) with the composite resin (II) tends to be improved.

The average molecular weight of the copolymer (I') can be adjusted by, for example, appropriately adding a chain transfer agent such as n-dodecyl mercaptan, 1-octanethiol, and 2-ethylhexyl thioglycolate during the polymerization.

The acid value of the copolymer (I') is preferably 35 to 200 mg KOH/g, more preferably 40 to 150 mg KOH/g, and still more preferably 50 to 100 mg KOH/g.

The acid value of the copolymer (I') is determined by dropwise adding potassium hydroxide (KOH) dissolved in ethanol to an aqueous solution of the copolymer (I') and performing titration based on the color change point of phenolphthalein. The acid value of the copolymer (I') is a numerical value required for neutralizing 1 g of the copolymer (I'), which is indicated in terms of mg of KOH.

In a case where the acid value of the copolymer (I') is equal to or greater than the lower limit value, the solubility of the copolymer (I') in water tends to be further improved.

In a case where the acid value of the copolymer (I') is equal to or lower than the upper limit value described above, the compatibility of the alkali-soluble resin (1) with the composite resin (II) and waterproofness of the coating film tends to be improved.

The acid value of the copolymer (I') increases as the content proportion of the monomer (b) unit in the copolymer (I') increases.

The copolymer (I') can be produced by polymerizing the monomer (a), the monomer (b), and as necessary the monomer (c) and/or the monomer (d).

As a polymerization method for producing the copolymer (I'), various polymerization methods such as a suspension polymerization method, a solution polymerization method, and a bulk polymerization method can be applied. Among these polymerization methods, the suspension polymerization method is preferred.

In a case where the suspension polymerization method is applied, the alkali-soluble resin (I) having excellent pigment dispersibility and excellent compatibility with the composite resin (II) can be easily produced.

[Base]

Examples of the base used for neutralizing the copolymer (I') for producing the alkali-soluble resin (I) include an organic metal hydroxide, ammonia, an amine compound, and morpholine.

Examples of the organic metal hydroxide include lithium hydroxide, sodium hydroxide, and potassium hydroxide.

Examples of the amine compound include triethylamine, propylamine, diethylamine, tripropylamine, dibutylamine, amylamine, 1-aminooctane, 2-dimethylaminoethanol, ethylaminoethanol, 2-diethylaminoethanol, 1-amino-2-propanol, 2-amino-1-propanol, 3-amino-1-propanol, 1-dimethylamino-2-propanol, 3-dimethylamino-1-propanol, 2-propylaminoethanol, ethoxypropylamine, and aminobenzyl alcohol.

Among the bases, ammonia and amine compounds are preferable since they easily volatilize during drying and hardly remain in the ink coating film after drying.

The base may be used alone or in a combination of two or more thereof.

<Composite resin (II)>

The composite resin (II) is a polymer obtained by compositing the urethane polymer (e) (hereinafter, also referred to as "polymer (e)") and the acrylic polymer (f) (hereinafter, also referred to as "polymer (f)").

The composition of the polymer (e) and the polymer (f) means that the polymer (e) and the polymer (f) are closely attached with each other.

For example, by polymerizing a (meth)acrylic monomer in the presence of the polymer (e) to form the polymer (f), and by closely attaching the polymer (f) to the polymer (e), a polymer in which the polymer (e) and the polymer (f) are composited can be obtained.

The polymer (e) is a urethane polymer obtained by reacting a polyol and a polyisocyanate. That is, the polymer (e) is a product obtained by reacting a polyol with a polyisocyanate.

The polyol is an organic compound having two or more hydroxy groups in one molecule, and various polyols including known polyols can be used.

Specific examples of polyols include a low molecular weight polyol having a number-average molecular weight of 500 or less, a polyether diol, a polyester polyol, a polyether polyol, a polycarbonate polyol, a polybutadiene polyol, a hydrogenated polybutadiene polyol, and a polyacrylic acid ester polyols.

Examples of the low molecular weight polyol include ethylene glycol, propylene glycol, 1,3-propanediol, 1,4-butanediol, 1,5-pentanediol, 3-methyl-1,5-pentanediol, 1,6-hexanediol, neopentyl glycol, diethylene glycol, trimethylene glycol, triethylene glycol, tetraethylene glycol, dipropylene glycol, tripropylene glycol, hexanediol, and cyclohexanedimethanol.

Examples of the polyether diol include polyols obtained by addition-polymerizing at least one of the low molecular weight polyols described above with ethylene oxide, propylene oxide, and tetrahydrofuran.

Examples of the polyester polyol include polyols obtained by polycondensing at least one of the low molecular weight polyols described above and a dicarboxylic acid such as adipic acid, sebacic acid, itaconic acid, maleic acid anhydride, terephthalic acid, and isophthalic acid.

Examples of the polyether polyol include polyethylene glycol, polypropylene glycol, polycaprolactone polyol, and polytetramethylene ether polyol.

The polyol may be singly used alone or in a combination of two or more thereof.

The polyisocyanate is an organic compound having two or more isocyanate groups in one molecule, and various polyisocyanates including known polyisocyanates can be used.

Specific examples of the polyisocyanate include an aliphatic polyisocyanate, an alicyclic polyisocyanate, and an aromatic polyisocyanate.

Examples of the aliphatic polyisocyanate include ethylene diisocyanate, tetramethylene diisocyanate, hexamethylene diisocyanate (HDI), dodecamethylene diisocyanate, 1,6,11-undecane triisocyanate, 2,2,4-trimethylhexamethylene diisocyanate, lysine diisocyanate, 2,6-diisocyanatomethylcaproate, bis(2-isocyanatoethyl)fumarate, bis(2-isocyanatoethyl)carbonate, and 2-isocyanatoethyl-2,6-diisocyanatohexanoate.

Examples of the alicyclic polyisocyanate include isophorone diisocyanate (IPDI), 4,4'-dicyclohexylmethane diisocyanate (hydrogenated MDI), cyclohexylene diisocyanate, methylcyclohexylene diisocyanate (hydrogenated TDI), bis(2-isocyanatoethyl)-4-cyclohexene-1,2-dicarboxylate, 2,5-norbornane diisocyanate, and 2,6-norbornane diisocyanate.

Examples of the aromatic polyisocyanate include 1,3-phenylene diisocyanate, 1,4-phenylene diisocyanate, 2,4-tolylene diisocyanate (TDI), 2,6-tolylene diisocyanate, 4,4'-diphenylmethane diisocyanate (MDI), 2,4-diphenylmethane diisocyanate, 4,4'-diisocyanatobiphenyl, 3,3'-dimethyl-4,4'-diisocyanatobiphenyl, 3,3'-dimethyl-4,4'-diisocyanatodiphenylmethane, 1,5-naphthylene diisocyanate, 4,4',4"-triphenylmethane triisocyanate, m-isocyanatophenylsulfonyl isocyanate, and p-isocyanatophenylsulfonyl isocyanate.

The polyisocyanate may be singly used alone or in a combination of two or more thereof.

The polymer (f) is a polymer having a constitutional unit derived from a (meth)acrylic monomer.

The (meth)acrylic monomer means a monomer having a (meth)acryloyl group.

Examples of the (meth)acrylic monomer include an alkyl (meth)acrylate, a hydroxyalkyl (meth)acrylate, and (meth)acrylic acid.

Examples of the alkyl (meth)acrylate include methyl (meth)acrylate, ethyl (meth)acrylate, propyl (meth)acrylate, n-butyl (meth)acrylate, isobutyl (meth)acrylate, t-butyl (meth)acrylate, cyclohexyl (meth)acrylate, 2-ethylhexyl (meth)acrylate, lauryl (meth)acrylate, and stearyl (meth)acrylate.

Examples of the hydroxyalkyl (meth)acrylate include 2-hydroxyethyl (meth)acrylate and 2-hydroxypropyl (meth)acrylate.

As the (meth)acrylic acid, acrylic acid and methacrylic acid are mentioned.

The (meth)acrylic monomer may be used alone or in a combination of two or more thereof.

The polymer (f) may have a radically polymerizable monomer unit other than the monomer unit derived from the (meth)acrylic monomer.

The radically polymerizable monomer is a monomer having a radically polymerizable group. The radically polymerizable group is a group containing a radically polymerizable carbon-carbon unsaturated double bond, a radically polymerizable carbon-carbon unsaturated triple bond, and a radically polymerizable ring by a ring opening.

Examples of the radically polymerizable monomer other than the (meth)acrylic monomer include an aromatic vinyl compound such as styrene and a vinyl cyanide compound such as acrylonitrile. The radically polymerizable monomer unit other than the monomer unit derived from the (meth)acrylic monomer in the polymer (f) is preferably 30% by mass or less, more preferably 10% by mass or less, and still more preferably 5% by mass or less.

As the content proportion of the polymer (f) with respect to the polymer (e) in the composite resin (II), the content of the polymer (f) is preferably 10 to 900 parts by mass, more preferably 30 to 300 parts by mass, and still more preferably 50 to 200, in a case where the polymer (e) is set to 100 parts by mass.

In a case where the content of the polymer (f) with respect to 100 parts by mass of the polymer (e) is within the above range, the performance of each component can be sufficiently exhibited, which further contributes to the dispersibility of the pigment, and the smoothness and the glossiness of the coating film.

The composite resin (II) is preferably an aqueous dispersion dispersed in water, that is, an emulsion type resin.

Examples of the method for producing the aqueous dispersion of the composite resin (II) include the method disclosed in Japanese Unexamined Patent Application, First Publication No. 2010-163612, and the like.

Specifically, a radical polymerization is performed by adding a (meth)acrylic monomer and, as necessary, a radically polymerizable monomer other than the (meth)acrylic monomer to the aqueous dispersion of the polymer (e), whereby polymer (f) is formed, and the composite resin (II) is obtained.

As the aqueous dispersion of the polymer (e), a commercially available urethane resin emulsion may be used, or the polymer (e) may be produced to prepare the aqueous dispersion of the polymer (e).

Examples of the method for producing the polymer (e) include a method of reacting a polyol with a polyisocyanate in an ether such as dioxane. A catalyst for forming a urethane, such as dibutyltin dilaurate, may be used during the reaction.

The aqueous dispersion of the polymer (e) is prepared by emulsifying the polymer (e).

Examples of the method for emulsifying the polymer (e) include a method of introducing a carboxy group into the polymer (e) and performing dispersion in water and a method of dispersing the polymer (e) in water using an emulsifier.

An aqueous dispersion of the polymer (e) may be also obtained by introducing a carboxy group into the polymer (e) and dispersing the polymer (e) in water using an emulsifier.

The emulsifier may be any of an anionic surfactant, a cationic surfactant, a nonionic surfactant, and an amphoteric surfactant.

The addition amount of the emulsifier is preferably 0.05 to 10 parts by mass and more preferably 0.1 to 5 parts by mass, with respect to 100 parts by mass of all the monomers.

The emulsifiers may be used alone or in a combination of two or more thereof.

In the aqueous dispersion of the polymer (e), the polymer (e) is in the form of the particle. The volume-average particle diameter of the polymer (e) particles contained in the aqueous dispersion of the polymer (e) is preferably 30 nm or more.

In a case where the volume-average particle diameter of the polymer (e) particles is equal to or greater than the lower limit value, the viscosity of the aqueous dispersion is decreased and the fluidity is improved.

On the other hand, the volume-average particle diameter of the polymer (e) particles is preferably 300 nm or less and more preferably 150 nm or less. In a case where the volume-average particle diameter of the polymer (e) particles is equal to or lower than the upper limit value, coarsening of the average particle diameter of the obtained composite resin (II) can be prevented, and storage stability can be improved.

The solid content of the aqueous dispersion of the polymer (e) is preferably 10% to 70% by mass and more preferably 25% to 60% by mass.

In a case where the solid content of the aqueous dispersion of the polymer (e) is equal to or greater than the lower limit value, the solid content of the water-based ink can be easily increased.

In a case where the solid content of the aqueous dispersion of the polymer (e) is equal to or lower than the upper limit value, the viscosity of the water-based ink can be easily decreased.

In a case where the polymer (e) is produced in the presence of an organic solvent, it is preferable to remove the organic solvent from the aqueous dispersion.

Radical polymerization is performed by adding a (meth)acrylic monomer and, as necessary, a radically polymerizable monomer other than the (meth)acrylic monomer to the aqueous dispersion of the polymer (e).

The method of adding a monomer to the polymer (e) may be a method of adding in one batch, a method of continuously adding, or a method of sequentially adding.

At the time of the radical polymerization, a radical polymerization initiator is added and heated to polymerize the monomer. The polymer (f) is formed by this polymerization and the composite resin (II) in which the polymer (e) and the polymer (f) are composited.

As the radical polymerization initiator, known radical polymerization initiators such as an azo compound, a persulfate, and an organic peroxide can be used without limitation. The addition amount of the radical polymerization initiator is preferably 0.01 to 5 parts by mass and more preferably 0.05 to 2 parts by mass, with respect to 100 parts by mass of all the monomers.

The heating temperature is usually in the range of 30°C to 90°C.

As described above, in a case where a (meth)acrylic monomer is added to the aqueous dispersion of the polymer (e) and the polymerization is performed, the (meth)acrylic monomer is polymerized in the presence of the polymer (e) to form the polymer (f), and it is possible to closely attach the polymer (f) to the polymer (e). Therefore, a polymer in which the polymer (e) and the polymer (f) are composited, that is, the composite resin (II) can be easily obtained.

<Proportion of copolymer (I') and composite resin (II)>

In the vehicle, the content of the alkali-soluble resin (I) and the composite resin (II) is, in the mass ratio of the copolymer (I') to the composite resin (II) [mass of the copolymer (I')/mass of the composite resin (II)], preferably 5/95 to 95/5 and more preferably 20/80 to 65/35.

In a case where the mass ratio of the copolymer (I') to the composite resin (II) is equal to or greater than the lower limit value, that is, in a case where a certain amount or more of the copolymer (I') is contained, the dispersibility of the pigment is further increased.

In a case where the mass ratio of the copolymer (I') to the composite resin (II) is equal to or lower than the upper limit value, that is, in a case where a certain amount or more of the composite resin (II) is contained, the strength of the coating film is increased, and the compatibility between the alkali-soluble resin (I) and the composite resin (II) is further improved.

<Other vehicle>

The other vehicle is a polymer other than the alkali-soluble resin (I) and the composite resin (II).

As the other vehicle, an acrylic resin not containing the monomer (a) unit, natural resins such as a casein resin, a shellac resin, and the like are mentioned. Further, as the other vehicle, an emulsion type resin other than the composite resin (II), a colloidal dispersion type resin, and the like are mentioned.

The other vehicle may be used alone or in a combination of two or more thereof.

(Solvent)

The water-based ink of the present invention contains water. In the water-based ink of the present invention, water is used as a solvent, but the water-based ink may contain a solvent other than water.

Examples of the solvent other than water include an alcohol-based solvent, a glycol based-solvent, and a carbitol-based solvent.

The solvent other than water may be used alone or in a combination of two or more thereof.

In a case where a solvent other than water is used, the content proportion of the solvent other than water is preferably 3% to 60% by mass and more preferably 5% to 50% by mass with respect to 100% by mass of the total solvent.

In a case where the content proportion of the solvent other than water is equal to or greater than the lower limit value described above, the dispersibility of the vehicle in the water-based ink can be further improved.

In a case where the content proportion of the solvent other than water is equal to or lower than the upper limit value, the ink can be referred to as a water-based ink.

(Auxiliary agent)

The water-based ink of the present invention may contain an auxiliary agent other than a pigment, a vehicle, and a solvent including water.

Examples of the auxiliary agent include antifoaming agents such as a silicone-based resin, a lubricant such as a polyethylene-based wax, a leveling agent such as a surfactant, a pigment dispersing agent for further improving pigment dispersibility, and a preservative.

(Method for producing water-based ink)

A water-based ink of the present invention is produced by mixing a pigment, a vehicle, and water.

One example of the method for producing the water-based ink of the present invention includes a method having a varnish production process, a pigment dispersion process, and a product finishing process, each of which is described below. However, the method for producing the water-based ink of the present invention is not limited to the production method described below.

<Varnish production process>

The varnish production process includes mixing the copolymer (I'), an aqueous alcohol solution, and a base to produce a water-soluble varnish.

Through this process, the copolymer (I') is neutralized by a base, thereby being the alkali-soluble resin (I), and the alkali-soluble resin (I) is dissolved in water. An aqueous solution of the alkali-soluble resin (I) is called a water-soluble varnish. During the above mixing, heating may be performed or heating may not be performed.

The concentration of the water-soluble varnish is preferably 20% to 40% by mass since the viscosity of the pigment paste is easily handled in the pigment dispersion process described later.

Further, the pH of the water-soluble varnish is preferably 6 to 9 at which the alkali-soluble resin (I) can be stably maintained in a dissolved state.

<Pigment dispersion process>

The pigment dispersion process includes mixing a pigment and a water-soluble varnish and kneading the resulting premix using a disperser to produce a premix.

By kneading, the aggregated pigment is dispersed, and a pigment paste in which the copolymer (I') is adsorbed on the surface of the pigment is produced.

Examples of the disperser used at the time of kneading include a bead mill, a sand mill, a ball mill, an attritor, and a roll mill.

<Product finishing process>

The product finishing process includes mixing the pigment paste with the aqueous dispersion of the composite resin (II) to produce a water-based ink.

In the product finishing process, as necessary, a diluent consisting of at least one of water and an organic solvent may be added to adjust the solid content concentration of the water-based ink.

In a case where the water-based ink contains an auxiliary agent, the auxiliary agent is appropriately blended in the product finishing process. However, the auxiliary agent may be blended in a process prior to the product finishing process.

(Use of water-based ink)

The water-based ink of the present invention is printed on the surface of a printing object medium such as a resin film, a resin molded body, and paper. An ink coating film is formed by printing to color the printing object medium.

Examples of the printing method include a gravure printing method, an offset printing method, a flexographic printing method, an inkjet printing method, a spray coating method, a roller coating method, a bar coating method, an air knife coating method, a casting method, a brush coating method, and a dipping method.

The water-based ink of the present invention can be suitably used for gravure printing. That is, the water-based ink of the present invention is preferably an ink for gravure printing.

The drying conditions after forming the ink coating film may be appropriately selected depending on the printing method and the like.

For example, in a case where gravure printing is performed on a resin film, it is preferable to dry for 10 seconds to 10 hours in a temperature range of 20°C to 60°C.

In a case where ammonia or an amine compound is used as the base of the copolymer (I'), the base easily volatilizes during drying after forming the ink coating film. Therefore, the ink coating film formed from the water-based ink containing the alkali-soluble resin (I) and the composite resin (II) becomes a coating film containing the copolymer (I') and the composite resin (II).

(Effect)

The water-based ink of the present invention contains, as the vehicle, an alkali-soluble resin (I) and a composite resin (II), and the composite resin (II) is a composite resin of the polymer (e) and the polymer (f).

According to the water-based ink of the present invention, the dispersibility of the pigment can be increased, and the smoothness and the glossiness of the ink coating film to be obtained can be increased.

[Examples]

Hereinafter, the present invention will be described in detail with reference to Examples. However, the present invention is not limited to the following Examples.

In addition, "part" and "%" in the following examples respectively mean "part by mass" and "% by mass".

In addition, the numerical value regarding each of the components in the table is indicated in terms of parts by mass.

In the following examples, the weight-average molecular weight, the acid value, the second-order transition temperature, and the solubility in water were measured or evaluated with respect to a polymer by the following methods. In addition, the viscosity of the water-soluble varnish obtained by dissolving a polymer in water was measured by the following method.

• Method of measuring weight-average molecular weight of polymer

A high performance gel permeation chromatography device HLC-8120GPC type (hereinafter, referred to as "GPC device") manufactured by Tosoh Corporation was used to measure the weight-average molecular weight of a polymer. A differential refraction detector (RI detector) was used as the detector. For the column to be attached to the GPC device, two TSKgel SuperHZM-M (4.6mml D × 15cm L) columns manufactured by Tosoh Corporation and one TSKgel HZ2000 (4.6mml D × 15cm L) column manufactured by Tosoh Corporation were connected and used.

Tetrahydrofuran (containing dibutylhydroxy toluene as a stabilizer) was used as an eluent for the measurement. The measurement conditions were set to as follows: an eluent flow rate of 0.35 ml/min; a measurement sample injection port temperature of 40°C; an oven temperature of 40°C; and an RI temperature of 40°C. A solution to which tetrahydrofuran was added so that the resin content was 0.2% by mass was prepared and used as the measurement sample.

10 $\mu$l of the solution of the measurement sample was injected into the measurement sample injection port of the GPC device, the elution curve was measured, and the weight-average molecular weight of the measurement sample was calculated based on the calibration curve of the standard polystyrene.

• Method of measuring acid value of polymer

The acid value of a polymer was measured as follows.

Approximately 0.2 g of a measurement sample was weighed (A(g)), the measurement sample was placed in a side-arm attached Erlenmeyer flask, and 10 ml of propylene glycol monomethyl ether (PGM) was further added therein to dissolve the measurement sample. After the dissolution, 10 ml of toluene, 20 ml of ethanol, and a few drops of a phenolphthalein solution were added therein and the resulting mixture was titrated with a 0.02 N potassium hydroxide solution (KOH solution). The titration amount of the potassium hydroxide solution was denoted by B (ml), the titer of the KOH solution was denoted by p, the titration amount of the blank was denoted by C (ml), which was obtained by blank measurement performed in the same manner, and an acid value was calculated according to the following expression.

$$\text{Acid value (mg KOH/g)} = \{(B - C) \times 0.02 \times 56.11 \times p\}/A$$

• Method of measuring second-order transition temperature of polymer

The second-order transition temperature of a polymer was determined from the intersection of the baseline of the chart and the tangential line of the endothermic curve at a temperature rising rate of 10°C/min using a differential scanning calorimeter ("Thermo plus EVO" manufactured by Rigaku Corporation). As a measurement sample, a polymer was weighed to have a concentration of 3 mg $\pm$ 0.5 mg in an aluminum pan, melted for 10 minutes at 100°C which was equal to or higher than the glass transition temperature, and then rapidly cooled with dry ice.

• Method of measuring viscosity of water-soluble varnish

The viscosity (viscosity at 60 rpm) of the water-soluble varnish was measured at 23°C using a B type (Brookfield type manufactured by Tokyo Keiki) viscometer.

• Evaluation of solubility of water-soluble varnish in water

The state of the water-soluble varnish was visually observed, and the solubility thereof in water was evaluated according to the following criteria. The clearer the water-based ink is, the higher the solubility in water is.

A: The water-based ink is transparent.
B: The water-based ink has no precipitates but has turbidity.
C: The water-based ink has precipitates.

(1) Preparation of dispersing agent 1

In a polymerization apparatus equipped with a stirrer, a cooling tube, and a thermometer, 900 parts of deionized water, 60 parts of sodium 2-sulfoethyl methacrylate, 10 parts of potassium methacrylate, and 12 parts of methyl methacrylate were added and stirred, and the temperature inside of the polymerization apparatus was raised to 50°C while replacing the atmosphere inside of the polymerization apparatus with nitrogen. Then, 0.08 parts of 2,2'-azobis(2-methylpropionamidine) dihydrochloride as a polymerization initiator was added therein, and the temperature was further raised to 60°C. After the temperature was raised, methyl methacrylate was continuously added dropwise at a rate of 0.24 part/minute for 75 minutes using a dropping pump. The total amount of methyl methacrylate added by dropwise addition is 18 parts. After the dropwise addition was completed, the reaction solution was kept at 60°C for 6 hours and then cooled to room temperature to obtain a dispersing agent 1 having a solid content of 10% as a transparent aqueous solution.

(2) Production of copolymer (I'-1)

In a polymerization apparatus equipped with a stirrer, a cooling tube, and a thermometer, 145 parts of deionized water, 0.1 parts of sodium sulfate, and 0.25 parts of the dispersing agent 1 (solid content: 10%) were added and stirred to obtain a homogeneous aqueous solution.

Next, in the polymerization apparatus, 43 parts of methyl methacrylate (MMA), 10 parts of styrene (St), 17 parts of n-butyl methacrylate (n-BMA), 20 parts of ethylhexyl acrylate (EHA), 10 parts of methacrylic acid (MAA) were added.

Subsequently, stirring was started, and 0.5 parts of 2,2'-dimethyl-2,2'-diazendiyldibutanenitrile (AMBN) and 1.9 parts of n-dodecylmercaptan (n-DM), 1.9 parts of 1-octanethiol (n-OM), and 1.9 parts of 2-ethylhexyl thioglycolate (OTG) were added therein, and the temperature was raised to 80°C.

The reaction was carried out for 2 hours while the reaction temperature was maintained within the range of 80°C to 85°C, and then the temperature was raised to 95°C and maintained for 1 hour, thereby completing the reaction.

The obtained copolymer (I'-1) had a weight-average molecular weight of 8000, an acid value of 61.2 mg KOH/g, and a second-order transition temperature of 30°C.

(3) Production of copolymer (I'-2) to copolymer (I'-7)

A copolymer (I'-2) to a copolymer (I'-7) was prepared in the same manner as in the production method of the copolymer (I'-1) except that the addition amount of the monomer was changed as shown in Table 1.

[Table 1]

| | Monomer | | | | |
| --- | --- | --- | --- | --- | --- |
| | (a) | (b) | (C) | (d) | |
| | St | MAA | MMA | n-BMA | EHA |
| Copolymer I'-1 | 10 | 10 | 43 | 17 | 20 |
| Copolymer I'-2 | 10 | 10 | 53 | 17 | 10 |
| Copolymer I'-3 | 10 | 10 | 13 | 67 | 0 |
| Copolymer I'-4 | 0 | 10 | 53 | 17 | 20 |
| Copolymer I'-5 | 10 | 5 | 48 | 17 | 20 |
| Copolymer I'-6 | 10 | 7 | 46 | 17 | 20 |
| Copolymer I'-7 | 10 | 15 | 38 | 17 | 20 |

Table 2 shows the second-order transition temperatures, the weight-average molecular weights, the acid values, and the solubility in water with respect to the obtained copolymers (I'-2) to (I'-7).

[Table 2]

| | Second-order transition temperature | Weight-average molecular weight | Acid value | Solubility in water |
|---|---|---|---|---|
| | °C | | mg KOH/g | |
| Copolymer I'-1 | 30 | 8000 | 61.2 | A |
| Copolymer I'-2 | 50 | 8000 | 61.5 | A |
| Copolymer I'-3 | 47 | 8000 | 61.0 | A |
| Copolymer I'-4 | 31 | 7800 | 61.1 | A |
| Copolymer I'-5 | 30 | 8100 | 31.2 | B |
| Copolymer I'-6 | 30 | 7900 | 43.4 | A |
| Copolymer I'-7 | 32 | 8000 | 91.9 | A |

(4) Production of alkali-soluble resin (I-1)

A 200 ml flask equipped with a stirrer and a thermometer was charged with a mixed solution of 30 g of the copolymer (I'-1), 27.1 g of isopropyl alcohol (IPA), and 40 g of deionized water.

Next, stirring was started at an internal temperature of 25°C, 2.9 g of 2-dimethylaminoethanol (DMAE) was gradually added in the flask, and then stirring was continued at room temperature for 2 hours to obtain a water-soluble varnish containing an alkali-soluble resin (1-1) which is a neutralized product of the copolymer (I'-1) by a base (DMAE).

The neutralization rate of the copolymer (I'-1) was 100%. The amount (unit: g) of DMAE used required to achieve a neutralization rate of 100% was calculated by the following expression, the acid value (mg KOH/g) of the copolymer (I'-1) $\div$ 56.1 $\div$ 1000 $\times$ 30 $\times$ 89.14.

(5) Production of alkali-soluble resin (1-2) to alkali-soluble resin (1-7)

Water-soluble varnishes respectively containing an alkali-soluble resin (1-2) to an alkali-soluble resin (1-7) were obtained in the same manner as in the method for producing a water-soluble varnish containing the alkali-soluble resin (1-1), except that the copolymer (I'-2) to the copolymer (I'-7) were used instead of the copolymer (I'-1).

Table 3 shows the solid content concentration and the viscosity of each of the water-soluble varnish containing the alkali-soluble resin (1-2) to the alkali-soluble resin (I-7).

[Table 3]

| | Copolymer (I') | Property of water-soluble varnish | |
|---|---|---|---|
| | | Solid content concentration | Viscosity |
| | | % | mPa·s |
| Alkali-soluble resin I-1 | Copolymer I'-1 | 30 | 400 |
| Alkali-soluble resin 1-2 | Copolymer I'-2 | 30 | 330 |
| Alkali-soluble resin I-3 | Copolymer I'-3 | 30 | 480 |
| Alkali-soluble resin 1-4 | Copolymer I'-4 | 30 | 430 |
| Alkali-soluble resin 1-5 | Copolymer I'-5 | 30 | 970 |
| Alkali-soluble resin 1-6 | Copolymer I'-6 | 30 | 730 |
| Alkali-soluble resin 1-7 | Copolymer I'-7 | 30 | 510 |

(6) Production of composite resin (II-1)

A flask equipped with a stirrer, a reflux cooling tube, a temperature control device, and a dropping pump was charged with 390.6 parts (solid content: 100.0 parts) of an anionic water-based urethane resin emulsion as a urethane polymer (manufactured by DKS Co. Ltd., trade name: F-2170D, solid content: 25.6%), 67 parts of deionized water, and a (meth)acrylic monomer consisting of 65.5 parts of MMA and 34.5 parts of ethyl acrylate (EA), and the temperature inside of the flask was raised to 40°C.

Thereafter, 0.02 parts of an aqueous solution of t-butyl hydroperoxide (manufactured by NOF Corporation, trade name: PERBUTYL H69, solid content: 69%) as a radical polymerization initiator, 0.0002 parts of ferrous sulfate as a reducing agent, 0.00027 parts of ethylenediamine tetraacetic acid (EDTA), 0.041 parts of sodium isoascorbate monohydrate, and 1 part of deionized water were added in the flask. After confirming the peak top temperature due to the heat generation by polymerization, the temperature inside of the flask was raised to 75°C, and 0.03 parts of an aqueous solution of t-butyl hydroperoxide and 10 parts of deionized water were further added in the flask.

The reaction liquid thus obtained was cooled to obtain an aqueous resin dispersion (emulsion type resin) containing the composite resin (II-1) of the urethane polymer (e) and the acrylic polymer (f), where the composite resin (II-1) was dispersed in water.

The solid content of this aqueous resin dispersion was 35%.

(7) Production of composite resin (II-2)

An aqueous resin dispersion (emulsion type resin) containing the composite resin (II-2) of the urethane polymer (e) and the acrylic polymer (f), where the composite resin (II-2) was dispersed in water, was obtained in the same manner as in the method for producing the composite resin (II-1), except that a (meth)acrylic monomer consisting of 25.9 parts of MMA and 74.1 parts of butyl acrylate (BA) was used instead of the (meth)acrylic monomer consisting of 65.5 parts of MMA and 34.5 parts of EA.

The solid content of this aqueous resin dispersion was 35%.

(8) Production of composite resin (II-3)

Aqueous resin dispersion (emulsion type resin) in which the composite resin (II-3) of the urethane polymer (e) and the acrylic polymer (f) was dispersed in water was obtained in the same manner as in the method for producing the composite resin (II-1), except that 273.2 parts (solid content 100.0 parts) of an anionic water-based urethane resin emulsion (manufactured by Nika Chemical Co., Ltd., trade name: X-7096, solid content: 36.6%) and 204 parts of deionized water were used instead of 390.6 parts (solid content: 100.0 parts) of an anionic water-based urethane resin emulsion (manufactured by DKS Co. Ltd., trade name: F-2170D, solid content: 25.6%), and 67 parts of deionized water.

The solid content of this aqueous resin dispersion was 34%.

Example 1

2.5 g of a pigment dispersing agent (trade name: TEGO 740, manufactured by Evonik Co. Ltd.), 45 g of a pigment (titanium oxide manufactured by Ishihara Sangyo Kaisha, Ltd., trade name: CR-90), 15 g of IPA, and 60 g of glass beads were added in order in 37.5 parts of a water-soluble varnish containing the alkali-soluble resin (1-1), and mixed and stirred to obtain a premix.

The obtained premix was kneaded for 1 hour using a sand mill to obtain a pigment paste.

40 parts of the composite resin (II-1) were added to 60 parts of the obtained pigment paste and diluted with 24 g of IPA and 6 g of deionized water to produce a water-based ink 1 for gravure printing.

The obtained water-based ink 1 was printed on a corona-treated surface of an OPP film (manufactured by Toyobo Co., Ltd., trade name: P-2108) by using a gravure printing machine (RK PrintCoat Instruments Ltd., trade name: GP-100) to form an ink coating film having a thickness of 1 μm to 10 μm. The obtained ink coating film was dried at 25°C for 1 hour.

<Evaluation>

The dispersibility of titanium oxide in the pigment paste and the smoothness and glossiness of the ink coating film were evaluated as follows.

The evaluation results are shown in Table 4.

• Dispersibility of pigment paste

The dispersity of the pigment paste was checked using a particle gauge (NO120302 manufactured by Chuo Precision Instruments Co., Ltd.) and evaluated according to the following criteria.

A: The result obtained by evaluating with the particle gauge is less than 10 $\mu$m.
B: The result obtained by evaluating with the particle gauge is 10 $\mu$m to 20 $\mu$m.
C: The result obtained by evaluating with the particle gauge is more than 20 $\mu$m.

• Smoothness of ink coating film

The leveling property of the surface of the dried ink coating film and the presence or absence of fisheyes or aggregates were visually observed, and the smoothness was evaluated according to the following criteria.

A: The surface of the ink coating film has a high leveling property, is free of fisheyes and aggregates, and is excellent in smoothness.
B: The leveling property of the surface of the ink coating film is slightly inferior to that of A, but there are no fisheyes or aggregates and the smoothness is good.
C: The leveling property of the ink coating film surface is low, or fisheyes or aggregates are present and the smoothness is low.

• Glossiness of ink coating film

The glossiness (60°) of the dried ink coating film was measured by using a variable glossmeter (manufactured by Nippon Denshoku Industries Co., Ltd., trade name: GLOSS METER VG 7000), and the glossiness was evaluated according to the following criteria.

A: The glossiness (60°) is more than 30.
B: The glossiness (60°) is 10 to 20.
C: The glossiness (60°) is less than 10.

Examples 2 to 11 and Comparative Examples 1 and 2

Water-based inks were produced and evaluated in the same manner as in Example 1 except that the composition of each of the water-based inks was changed as shown in Table 4.
The evaluation results are shown in Table 4.

[Table 4]

| | | Example | | | | | | | | | | | Comparative Example | |
|---|---|---|---|---|---|---|---|---|---|---|---|---|---|---|
| | | 1 | 2 | 3 | 4 | 5 | 6 | 7 | 8 | 9 | 10 | 11 | 1 | 2 |
| Polymer (I) | Polymer I'-1 | 5.19 | - | - | - | - | - | - | 5.19 | 5.19 | 4.33 | 3.63 | 5.19 | - |
| | Polymer I'-2 | - | 5.19 | - | - | - | - | - | - | - | - | - | - | - |
| | Polymer I'-3 | - | - | 5.19 | - | - | - | - | - | - | - | - | - | - |
| | Polymer I'-4 | - | - | - | 5.19 | - | - | - | - | - | - | - | - | - |
| | Polymer I'-5 | - | - | - | - | 5.19 | - | - | - | - | - | - | - | - |
| | Polymer I'-6 | - | - | - | - | - | 5.19 | - | - | - | - | - | - | - |
| | Polymer I'-7 | - | - | - | - | - | - | 5.19 | - | - | - | - | - | - |
| Solid content of polymer (II) | Polymer II-1 | 10.77 | 10.77 | 10.77 | 10.77 | 10.77 | 10.77 | 10.77 | - | - | 13.46 | 15.62 | - | 15.96 |
| | Polymer II-2 | - | - | - | - | - | - | - | 10.77 | - | - | - | - | - |
| | Polymer II-3 | - | - | - | - | - | - | - | - | 10.77 | - | - | - | - |
| Solid content of urethane resin emulsion | | - | - | - | - | - | - | - | - | - | - | - | 10.77 | - |
| Titanium oxide | | 20.77 | 20.77 | 20.77 | 20.77 | 20.77 | 20.77 | 20.77 | 20.77 | 20.77 | 17.31 | 14.54 | 20.77 | 20.77 |
| Pigment dispersing agent | | 1.15 | 1.15 | 1.15 | 1.15 | 1.15 | 1.15 | 1.15 | 1.15 | 1.15 | 0.96 | 0.81 | 1.15 | 1.15 |
| IPA | | 30.08 | 30.08 | 30.08 | 30.08 | 30.08 | 30.08 | 30.08 | 30.08 | 30.08 | 28.14 | 26.59 | 30.08 | 30.08 |
| Water | | 31.54 | 31.54 | 31.54 | 31.54 | 31.54 | 31.54 | 31.54 | 31.54 | 31.54 | 35.38 | 38.46 | 31.54 | 32.04 |
| DMAE | | 0.50 | 0.50 | 0.50 | 0.50 | 0.50 | 0.50 | 0.50 | 0.50 | 0.50 | 0.42 | 0.35 | 0.50 | 0 |
| Dispersity of pigment | | A | A | A | A | A | A | A | A | A | A | A | A | C |
| Smoothness of ink coating film | | A | A | B | A | B | A | A | B | A | A | B | C | C |
| Glossiness of ink coating film | | A | A | B | B | B | B | B | B | B | A | A | C | C |

The water-based inks of Examples 1 to 11, which are the water-based inks of the present invention, had high dispersibility of the pigment, and the ink coating films had high smoothness and glossiness.

In Comparative Example 1 containing no composite resin (II), the ink coating film had low smoothness and glossiness.

In Comparative Example 2 containing no alkali-soluble resin (I), pigment dispersibility was low but also the ink coating film had low smoothness and glossiness.

**Claims**

1. A water-based ink comprising:

   a pigment;
   a vehicle; and
   water,
   wherein the vehicle comprises an alkali-soluble resin (I) and a composite resin (II), and
   the composite resin (II) is a composite resin of a urethane polymer (e) and an acrylic polymer (f).

2. The water-based ink according to claim 1, wherein the composite resin (II) is an emulsion type resin.

3. The water-based ink according to claim 1 or 2, wherein the alkali-soluble resin (I) is a neutralized product of a copolymer (I') by a base, and
   the copolymer (I') comprises a monomer unit derived from a styrene derivative (a) and a monomer unit derived from an acid group-containing vinyl compound (b).

4. The water-based ink according to claim 3, wherein the copolymer (I') further comprises a monomer unit derived from methyl methacrylate (c).

5. The water-based ink according to claim 4, wherein the copolymer (I') further comprises a monomer unit derived from a vinylic monomer (d) other than the monomer unit derived from the styrene derivative (a), the monomer unit derived from the acid group-containing vinyl compound (b), and the monomer unit derived from the methyl methacrylate (c).

6. The water-based ink according to claim 5, wherein with respect to a mass (100% by mass) of the copolymer (I'), the content proportion of the monomer unit derived from the styrene derivative (a) is 5% to 30% by mass, the content proportion of the monomer unit derived from the acid group-containing vinyl compound (b) is 4% to 20% by mass, the content proportion of the monomer unit derived from the methyl methacrylate (c) is 5% to 70% by mass, and the content proportion of the monomer unit derived from the vinylic monomer (d) is 10% to 70% by mass.

7. The water-based ink according to claim 5 or 6, wherein the vinylic monomer (d) contains an alkyl (meth)acrylate containing an alkyl group having 4 to 15 carbon atoms.

8. The water-based ink according to claim 5 or 6, wherein the vinylic monomer (d) contains an alkyl (meth)acrylate containing an alkyl group having 4 to 6 carbon atoms.

9. The water-based ink according to claim 5 or 6, wherein the vinylic monomer (d) contains an alkyl (meth)acrylate containing an alkyl group having 7 to 10 carbon atoms.

10. The water-based ink according to claim 8, wherein the vinylic monomer (d) further contains an alkyl (meth)acrylate containing an alkyl group having 7 to 10 carbon atoms.

11. The water-based ink according to any one of claims 3 to 10, wherein a second-order transition temperature of the copolymer (I') is 10°C to 150°C.

12. The water-based ink according to any one of claims 3 to 11, wherein the copolymer (I') has a weight-average molecular weight of 5,000 to 30,000.

**13.** The water-based ink according to any one of claims 3 to 12, wherein an acid value of the copolymer (I') is 35 to 200 mg KOH/g.

**14.** The water-based ink according to any one of claims 3 to 13, wherein a mass ratio [mass of copolymer (I')/mass of composite resin (II)] of the copolymer (I') to the composite resin (II) is 5/95 to 95/5.

**15.** The water-based ink according to any one of claims 1 to 14, wherein the water-based ink is an ink for gravure printing.

**INTERNATIONAL SEARCH REPORT**

| International application No. |
| --- |
| PCT/JP2019/017663 |

| A. CLASSIFICATION OF SUBJECT MATTER |
| --- |
| Int.Cl. C09D11/107(2014.01)i, C09D11/102(2014.01)i |
| According to International Patent Classification (IPC) or to both national classification and IPC |

| B. FIELDS SEARCHED |
| --- |
| Minimum documentation searched (classification system followed by classification symbols) |
| Int.Cl. C09D11/107, C09D11/102 |

| Documentation searched other than minimum documentation to the extent that such documents are included in the fields searched |
| --- |
| Published examined utility model applications of Japan 1922–1996<br>Published unexamined utility model applications of Japan 1971–2019<br>Registered utility model specifications of Japan 1996–2019<br>Published registered utility model applications of Japan 1994–2019 |

| Electronic data base consulted during the international search (name of data base and, where practicable, search terms used) |
| --- |
| JSTPlus/JMEDPlus/JST7580(JDreamIII), Keyword: 水性インク, アルカリ可溶型樹脂 and similar terms |

| C. DOCUMENTS CONSIDERED TO BE RELEVANT | | |
| --- | --- | --- |
| Category* | Citation of document, with indication, where appropriate, of the relevant passages | Relevant to claim No. |
| X<br>Y | JP 2002-88215 A (CHUO RIKA KOGYO CORP.) 27 March 2002, claims, paragraphs [0022]–[0072], examples, etc.<br>(Family: none) | 1-3, 11-15<br>4-10 |
| X<br>Y | JP 2017-101212 A (RICOH CO., LTD.) 08 June 2017, claims, paragraphs [0067], [0144]–[0166], example 14, etc.<br>& US 2017/0158892 A1, claims, paragraphs [0156], [0257]–[0303], example 14, etc. | 1-3, 11-15<br>4-10 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 20.06.2019 | 02.07.2019 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.

PCT/JP2019/017663

C (Continuation).    DOCUMENTS CONSIDERED TO BE RELEVANT

| Category* | Citation of document, with indication, where appropriate, of the relevant passages | Relevant to claim No. |
|---|---|---|
| X | JP 4-198373 A (DAINIPPON INK AND CHEMICALS INC.) 17 July 1992, claims, page 4, example 2, etc. (Family: none) | 1-3, 11-15 |
| Y | | 4-10 |
| X | JP 2004-306424 A (TOHO PACKAGING INC.) 04 November 2004, claims, paragraph [0043], example 3, etc. (Family: none) | 1-3, 11-15 |
| Y | | 4-10 |
| Y | JP 2002-226758 A (TOYO INK MFG CO., LTD.) 14 August 2002, paragraph [0045], examples, etc. (Family: none) | 4-10 |
| Y | JP 2006-131791 A (DAINIPPON INK AND CHEMICALS INC.) 25 May 2006, claims, paragraphs [0018], [0058], [0065]-[0086], example 1, etc. (Family: none) | 1-15 |
| Y | JP 2012-184321 A (TOYO INK SC HOLDINGS CO., LTD.) 27 September 2012, claims, paragraphs [0016], [0025]-[0036], examples, etc. (Family: none) | 1-15 |
| Y | JP 7-188353 A (TAISEI KAKO CO., LTD.) 25 July 1995, paragraph [0004], examples, etc. (Family: none) | 1-15 |
| Y | JP 7-242850 A (THE INCTEC INC.) 19 September 1995, paragraph [0003], examples, etc. (Family: none) | 1-15 |
| Y | JP 11-10799 A (DAI NIPPON PRINTING CO., LTD.) 19 January 1999, examples, etc. (Family: none) | 1-15 |
| A | JP 10-204367 A (SAKATA INX CORPORATION) 04 August 1998, claims, examples, etc. (Family: none) | 1-15 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018087623 A
- JP H748538 B
- JP H441517 B
- JP 2010163612 A